# EUROPEAN PATENT SPECIFICATION

(11) **EP 3 997 331 B1**
(45) Date of publication and mention of the grant of the patent: **07.06.2023**
(21) Application number: 20739567.4
(22) Date of filing: 09.07.2020
(51) Int. Cl.: F03D 1/06

(54) **CONNECTION FOR SPLIT WIND TURBINE BLADE**
VERBINDUNG FÜR GETEILTES WINDTURBINENBLATT
RACCORD POUR PALE D'ÉOLIENNE À DEUX BLOCS

(30) Priority: 12.07.2019 DK PA201970462
(43) Date of publication of application: 18.05.2022
(73) Proprietor: VESTAS WIND SYSTEMS A/S, 8200 Aarhus N (DK)
(72) Inventor: HEDGES, Andrew, Greater London KT6 7JL (GB); ERNST, Robert, 8000 Århus C (DK); MASMANIDIS, Iordanis, Portsmouth PO3 6HB (GB)
(74) Representative: Vestas Patents Department
(86) International application number: PCT/DK2020/050210
(87) International publication number: WO 2021/008665

(56) References cited:
- DE-A1-102010 015 392
- US-A1- 2018 298 879

## Description

### FIELD OF THE INVENTION

The present invention relates to a wind turbine blade, and a method of manufacturing such a wind turbine blade.

### BACKGROUND OF THE INVENTION

A wind turbine converts kinetic energy of the wind into electrical energy. A generator converts the wind energy captured by a rotor having one or more rotor blades into electrical energy that is usually supplied to a utility grid. The generator is housed in a nacelle together with the various components required to operate and optimize the performance of the wind turbine. A tower supports the load presented by the nacelle and the rotor. In a horizontal axis wind turbine (HAWT) the rotor blades extend radially outwardly from a central hub which rotates about a longitudinal axis aligned generally horizontally. In operation, the blades are configured to interact with the passing air flow to produce lift that causes the rotor to rotate within a plane substantially perpendicular to the direction of the wind.

A conventional rotor blade is made from an outer shell and one or more inner spars in a hollow space bounded by the outer shell. The spar serves to transfer loads from the rotating blade to the hub of the wind turbine. Such loads include tensile and compressive loads directed along the length of the blade arising from the circular motion of the blade and loads arising from the wind which are directed along the thickness of the blade, i.e. from the windward side of the blade to the leeward side. The spar may typically have a hollow tubular section, e.g. generally rectangular hollow tubular section, or a beam section, e.g. I-beam, C-beam, H-beam, Y-beam, X-beam, etc., with one or more shear webs extending between spar caps. The spar caps may be incorporated into the outer shell or may be attached to the outer shell.

The spar cap may include pultruded fibrous strips of material. Pultrusion is a continuous process similar to extrusion, wherein fibres are pulled through a supply of liquid resin and then heated in an open chamber where the resin is cured. The resulting cured fibrous material is of constant cross section but, since the process is continuous, the material once formed may be cut to any arbitrary length

As wind turbine blade lengths increase, it has become desirable to manufacture and transport blades as separate portions and to construct the blades on a site closer to the wind turbine, or when a portion of the blade is fixed to a hub of a wind turbine. Existing methods of connecting span-wise blade sections commonly involve a high number of parts, which require very accurate machining and have complex constructions.

DE102010015392A1 describes a segmented wind turbine blade where a joint is formed by interleaved layers in a comb form

The aim of the present invention is to provide a wind turbine blade with joinable portions, which has a low parts count, making the joint easier to manufacture and join, with better load transfer across the blade.

### SUMMARY OF THE INVENTION

A first aspect of the invention provides a wind turbine blade comprising: a first blade portion having a shell that defines a suction side, a pressure side, a leading edge, and a trailing edge of the blade, the first blade portion further including a first spar cap portion; a second blade portion having a shell that defines a suction side, a pressure side, a leading edge, and a trailing edge of the blade, the second blade portion further including a second spar cap portion; and a connection joint for coupling the first and second blade portions together, wherein the connection joint includes: a plurality of first layers associated with the first spar cap portion and having at least one cut out at one end; a plurality of second layers associated with the second spar cap portion and having at least one cut out at one end; and a plurality of fasteners, wherein the plurality of first layers and the plurality of second layers are interleaved with their cut outs aligned, and the fasteners pass through the cut outs of the plurality of first and second layers and are tensioned to clamp together the interleaved plurality of first and second layers between the first and second blade portions.

The term "cut out" means that the cut outs are open at the ends of the respective first and second layers. In other words, the cut outs are not holes which have a complete boundary.

The connection joint may further comprise at least one row of fasteners passing through the cut outs of the plurality of first and second layers and tensioned to clamp together the interleaved plurality of first and second layers between the first and second blade portions.

The cut outs may provide a clearance fit with the fastener received therein.

The wind turbine blade may further comprise metal plates on either side of the interleaved plurality of first and second layers, with the tensioned fasteners passing through fastener receiving holes in the metal plates and bearing against respective surfaces of the metal plates.

The wind turbine blade may further comprise at least one first metal layer associated with the first spar cap portion, and at least one second metal layer associated with the second spar cap portion, wherein the at least one first metal layer and the at least one second metal layer are interleaved with the plurality of first layers and the plurality of second layers.

At least some of the first layers of the first spar cap portion may have an associated first metal layer, and at least some of the composite layers of the second spar cap portion may have an associated second metal layer, and the first and second spar cap portions and their associated metal layers may be are interleaved such that at least some of the composite layers and metal layers are alternating through the connection joint.

The plurality of first layers may form part of the first spar cap portion, and the plurality of second layers may form part of the second spar cap portion, and wherein the plurality of first layers extend beyond an end of the shell of the first blade portion and into the connection joint, and the plurality of second layers extend beyond an end of the shell of the second blade portion and into the connection joint.

The plurality of first layers and the plurality of second layers may include composite material.

The first and/or second spar cap portions may include pultruded carbon layers.

The first and/or second spar cap portions may include composite layers with one or more spacers between adjacent composite layers.

The one or more spacers may be scarfed between adjacent composite layers.

The first and/or second spar caps may have a substantially constant width up to and/or through the connection joint.

The thickness of the first and/or second spar caps may increase towards the connection joint.

An infill material may be provided between the respective blade shell and the first and/or second spar caps to accommodate the increasing spar cap thickness whilst maintaining a contiguous outer surface of the blade shells on either side of the connection joint.

The first blade portion may have an upper shell half and a lower shell half, and the second blade portion may have an upper shell half and a lower shell half, and wherein each of the upper and lower shell halves of the first blade portion have a respective first spar cap portion, and each of the upper and lower shell halves of the second blade portion have a respective second spar cap portion, a plurality of the first layers associated with each of the first spar cap portions and having at least one cut out at one end, a plurality of the second layers associated with each of the second spar cap portions and having at least one cut out at one end, wherein the plurality of first layers and the plurality of second layers associated with the upper shell halves are interleaved with their cut outs aligned and clamped together between the first and second blade portions, and the plurality of first layers and the plurality of second layers associated with the lower shell halves are interleaved with their cut outs aligned, and the fasteners pass through the cut outs of the plurality of first and second layers and are tensioned to clamp together the interleaved plurality of first and second layers between the first and second blade portions.

The first and/or second spar cap portions may be integrated into the shell of the first and/or second blade portions, respectively.

A second aspect of the invention provides a method of assembling a wind turbine blade, the wind turbine blade comprising: a first blade portion having a shell that defines a suction side, a pressure side, a leading edge, and a trailing edge of the blade, the first blade portion further including a first spar cap portion; a second blade portion having a shell that defines a suction side, a pressure side, a leading edge, and a trailing edge of the blade, the second blade portion further including a second spar cap portion; a plurality of first layers associated with the first spar cap portion and having at least one cut out at one end; a plurality of second layers associated with the second spar cap portion and having at least one cut out at one end; and a plurality of fasteners, the method comprising bringing the first and second blade portions together such that the plurality of first layers and the plurality of second layers are interleaved with their cut outs aligned, passing the fasteners through the cut outs of the plurality of first and second layers, and tensioning the fasteners to clamp together the interleaved plurality of first and second layers between the first and second blade portions to couple the first and second blade portions together.

A wind turbine blade may comprise: a first blade portion having a shell that defines a suction side, a pressure side, a leading edge, and a trailing edge of the blade, the first blade portion further including a first spar cap portion; a second blade portion having a shell that defines a suction side, a pressure side, a leading edge, and a trailing edge of the blade, the second blade portion further including a second spar cap portion; and a connection joint for coupling the first and second blade portions together, wherein the connection joint includes: a plurality of first metal layers associated with the first spar cap portion; and a plurality of second metal layers associated with the second spar cap portion, wherein the plurality of first metal layers and the plurality of second metal layers are interleaved and clamped together between the first and second blade portions.

The connection joint with interleaved metal layers provides a compact, lightweight jointing solution that is easy to assemble, and disassemble if required. The interleaved metal layers form a comb-like frictional connection between the blade portions. The metal layers on each side of the joint form a series of projecting substantially planar fins which interleave with their counterpart on the other side of the joint. The metal layers are easier to slide with respect to one another when bringing the blade portions together for jointing, as compared with interleaved composite layers. The metal layers may be metal plates or metal sheets for example. The interleaved metal layers may be clamped such that substantially all (up to 100%) load carried through the connection joint between the blade portions is transferred by friction between the interleaved layers. The metal layers may be integrated into the respective spar caps. By integrating the metal layers into the spar caps there may be a reduced need for a change in the profile of the blade at the connection joint between the blade portions, which may provide improved aerodynamic performance of the blade.

### BRIEF DESCRIPTION OF THE DRAWINGS

Embodiments of the invention will now be described with reference to the accompanying drawings, in which:
Figure 1 shows a wind turbine;
Figure 2 shows a blade of the wind turbine of Figure 1;
Figure 3 shows a sectional view through the blade of Figure 2 at A-A;
Figure 4 shows a detail view of the spar cap in the blade shell of Figure 3 at location B;
Figure 5a shows a schematic perspective view of two separated blade portions showing the spar caps with comb-like fins projecting from the mid-span ends of the blade shells of the respective blade portions; and Figure 5b shows a schematic side view of the spar caps in isolation at the connection joint;
Figure 6 shows a schematic side view of an example of the connection joint;
Figure 7 shows a schematic side view of another example of the connection joint;
Figures 8-10 show schematic plan views of the connection joint according to another example, with figure 8 showing the separated blade portions prior to joining, figure 9 showing the blade portions brought together, and figure 10 showing the completed joint;
Figure 11 shows a schematic plan view of the blade portion on one side of the connection joint according to a yet further example;
Figure 12 shows a schematic side view of another example of the connection joint;
Figure 13 shows the connection joint of figure 12 during assembly;
Figure 14 shows a schematic section view of the blade shell across the connection joint according to an example; and
Figure 15 shows a schematic section view of the blade shell across the connection joint according to another example.

### DETAILED DESCRIPTION OF EMBODIMENT(S)

In this specification, terms such as leading edge, trailing edge, pressure side, suction side, spanwise, chord, thickness, spar cap and shear web are used. While these terms are well known and understood to a person skilled in the art, definitions are given below for the avoidance of doubt.

The term leading edge is used to refer to an edge of the blade which will be at the front of the blade as the blade rotates in the normal rotation direction of the wind turbine rotor.

The term trailing edge is used to refer to an edge of a wind turbine blade which will be at the back of the blade as the blade rotates in the normal rotation direction of the wind turbine rotor.

A pressure side (or windward surface) of a wind turbine blade is a surface between the leading edge and the trailing edge, which, when in use, has a higher pressure than a suction side of the blade.

A suction side (or leeward surface) of a wind turbine blade is a surface between the leading edge and the trailing edge, which will have a lower pressure acting upon it than that of a pressure side, when in use.

The term spanwise is used to refer to a direction from a root end of a wind turbine blade to a tip end of the blade, or vice versa. When a wind turbine blade is mounted on a wind turbine hub, the spanwise and radial directions will be substantially the same.

The chord of a blade is the straight line distance from the leading edge to the trailing edge in a given cross section perpendicular to the blade spanwise direction.

The thickness of a wind turbine blade is measured perpendicularly to the chord of the blade and is the greatest distance between the pressure surface and the suction surface in a given cross section perpendicular to the blade spanwise direction.

The term spar cap is used to refer to a longitudinal, generally spanwise extending, reinforcing member of the blade. The spar cap may be embedded in the blade shell, or may be attached to the blade shell. The spar caps of the windward and leeward sides of the blade may be joined by one or more shear webs extending through the interior hollow space of the blade. The blade may have more than one spar cap on each of the windward and leeward sides of the blade. The spar cap may form part of a longitudinal reinforcing spar or support member of the blade. In particular, the first and second spar caps may form part of the load bearing structure extending in the longitudinal direction that carries the flap-wise bending loads of the blade.

The term shear web is used to refer to a longitudinal, generally spanwise extending, reinforcing member of the blade that can transfer load from one of the windward and leeward sides of the blade to the other of the windward and leeward sides of the blade.

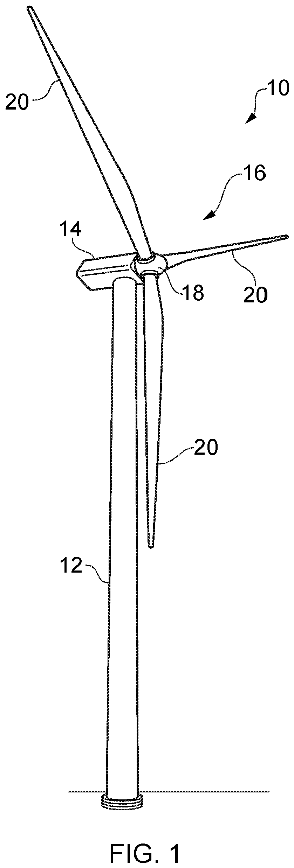

Figure 1 shows a wind turbine 10 including a tower 12 and a nacelle 14 disposed at the apex of the tower 12.

A rotor 16 is operatively coupled via a gearbox to a generator (not shown) housed inside the nacelle 14. The rotor 16 includes a central hub 18 and a plurality of rotor blades 20, which project radially outwardly from the central hub 18. While the example shown in figure 1 has 3 blades, it will be realised by the skilled person that other numbers of blades are possible.

When wind blows against the wind turbine 10, the blades 20 generate a lift force which causes the rotor 16 to rotate, which in turn causes the generator within the nacelle 14 to generate electrical energy.

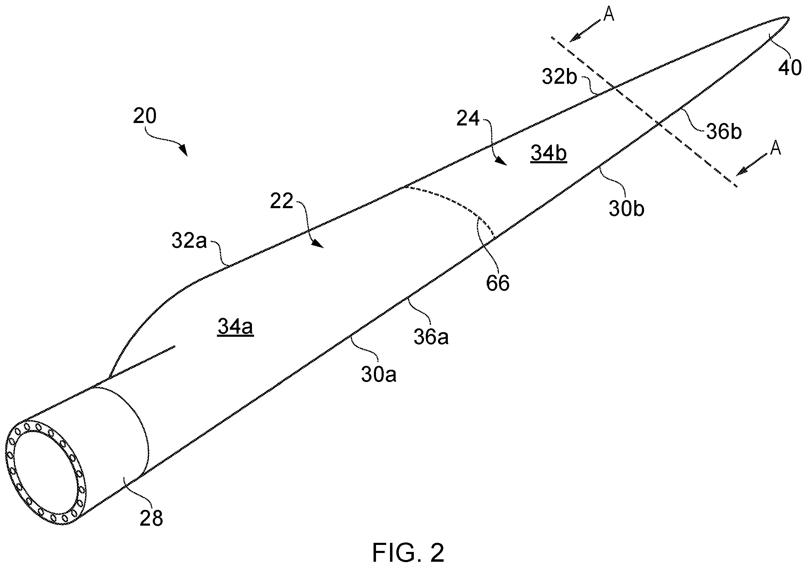

Figure 2 is a view of one of the blades 20. The blade 20 extends from a generally circular root 28 to a tip 40 in a longitudinal "spanwise" direction, and between a leading edge 36a, 36b and a trailing edge 32a, 32b, in a transverse "chordwise" direction. The blade 20 comprises a suction surface 30a, 30b, and a pressure surface 34a, 34b. A thickness dimension of the blade extends between the suction surface 30a, 30b and the pressure surface 34a, 34b.

The blade 20 is a split wind turbine blade formed of a first portion 22 and a second portion 24, which may be connected at a connection joint indicated by connection line 66. The connection line 66 between the first and second blade portions 22, 24 may be a spanwise split, with the connection line 66 being chordwise.

As will be described below, each wind turbine blade portion 22, 24 may be manufactured separately. Alternatively, the blade portions 22, 24 may be manufactured together in the same mould and then split. Each blade portion is then transported to a site for erection of the wind turbine. The blade portions are then joined together at the erection site to form the completed blade 20 before each blade is mounted to the hub 18 to form the rotor 16 of the wind turbine. The blades 20 may also be coupled while a portion of the blade 20 is connected to the hub 18. This can reduce the load which is needed to be lifted by a crane and can also allow replacement of only a portion of a blade, for example if a tip portion has been damaged.

The first blade portion 22 has a pressure surface 34a, a leading edge 36a, a suction surface 30a and a trailing edge 32a. The first blade portion 22 extends from the blade root 28 to the connection line 66. The blade 20 also comprises a second blade portion 24, extending from the blade connection line 66 to the blade tip 40 and the second blade portion 24 has a pressure surface 34b, a leading edge 36b, a suction surface 30b and a trailing edge 32b. The connection joint may be covered by a fairing, which may provide a surface over the joint with minimal worsening of the aerodynamic profile of the two blade portions.

While the example shown in figure 2 has two blade portions, it will be understood that a blade may have three or more blade portions with a connection joint between adjacent blade portions.

While the first wind turbine blade portion 22 is showing as being nearer the root of the blade 20 and second wind turbine blade portion 24 is shown as being nearer the tip of the wind turbine blade 20, the labels "first" and "second" are not intended to be limiting and any specific property disclosed as being associated with the first or second wind turbine blade portion may be applied to the other wind turbine blade portion.

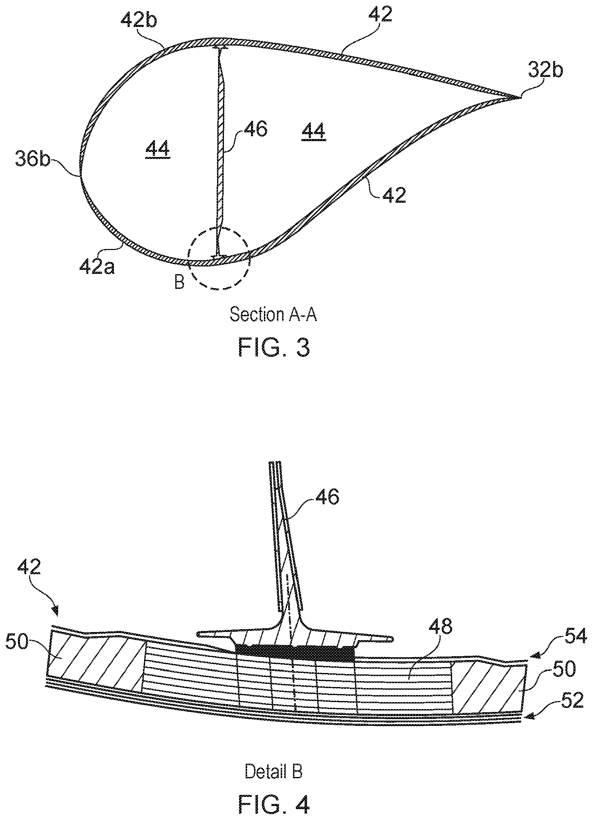

As shown in figure 3, the second wind turbine blade portion 24 includes an outer blade shell 42 defining a hollow interior space 44 with a shear web 46 extending internally between upper and lower parts of the blade shell 42. The blade shell 42 may comprise two half-shells 42a, 42b which are separately moulded before being joined together (at the leading edge 36b and the trailing edge 32b) to form the blade portion 22. It will be appreciated that the blade shell 42 need not be formed as two half-shells which are subsequently joined together but may be formed as a unitary shell structure, together with the shear web 46, in a "one shot" single shell process. The blade shell 42 may include a laminate composite material such as glass fibre and/or carbon fibre for example. The first wind turbine blade portion 22 is constructed similarly.

Figure 4 shows a detail view of the region where the shear web 46 meets the blade shell 42. A spar cap 48 may be incorporated into the outer shell 42, as shown in Figure 4, or may be attached to the outer shell 42. The spar cap 48 is an elongate reinforcing structure extending substantially along the full length of the blade portion 22, 24. The spar cap 48 includes composite material, such as carbon fibres. For example, the spar cap may include pultruded fibrous strips of material such as pultruded carbon fibre composite material or other carbon fibre reinforced plastic material. The pultruded fibres may be oriented in a longitudinal direction of the spar cap 48 which is aligned with the longitudinal or spanwise direction of the blade 20.

The spar cap 48 may include a stack of layers of the composite material. The spar cap 48 may comprise a plurality of stacks, e.g. 2, 3 or more, of the layers of the composite material arranged immediately adjacently in the blade chordwise direction. This may aid conformity of the spar cap to the curvature of the blade profile, especially where the composite material is particularly stiff so as to prevent bridging across a curved mould surface.

The shear web 46 may be adhesively bonded to an inner surface of the spar cap 48. One or more layers 52 of glass fibre reinforced plastic may be provided over the outside of the spar cap 48. The layers 52 collectively form an outer skin of the blade shell 42. One or more further layers of glass fibre reinforced plastic may provide an inner skin 54 of the blade shell 42 with a core material 50 between the outer skin 52 and the inner skin 54. The core material may be a light structural foam, though other core materials such as wood, particularly balsa wood may alternatively be used to provide a lightweight core material. It will be appreciated that a near identical connection is made between the shear web 46 and the other side of the blade shell 42.

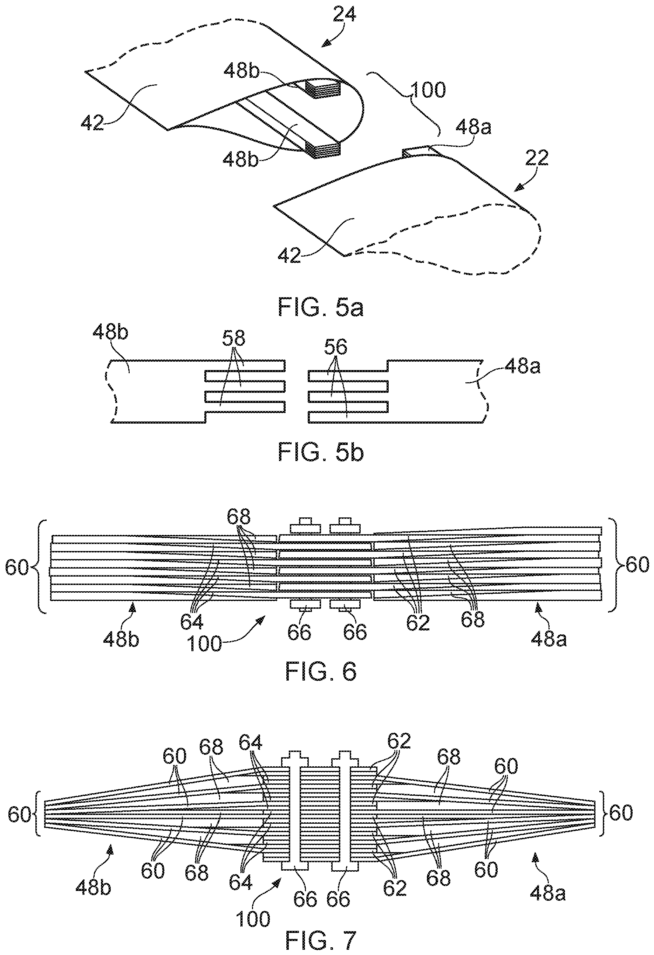

Figures 5a and 5b show a connection joint 100 between the first blade portion 22 and the second blade portion 24. The connection joint 100 is for coupling the first and second blade portions 22, 24 together. The connection joint 100 is formed, in general terms, of a plurality of first layers 56 associated with a first spar cap portion 48a (where the first spar cap portion is the portion of the spar cap 48 of the first blade portion 22), and a plurality of second layers 58 associated with a second spar cap portion 48b (where the second spar cap portion is the portion of the spar cap 48 on the second blade portion 24). The plurality of first layers 56 and the plurality of second layers 58 are interleaved, and fasteners pass through the plurality of first and second layers and are tensioned to clamp together the interleaved plurality of first and second layers between the first and second blade portions 22, 24. The blade may have more than one longitudinal reinforcing spar or support member. For example, the blade may have a main spar (comprising the shear web 46 and the spar caps 48) and a trailing edge spar or stringer (not shown). A connection joint similar to the connection joint 100 may be used to join the spar caps of the trailing edge spar or stringer or other longitudinal reinforcing member of the blade.

The interleaved layers form a comb-like frictional connection between the blade portions 22, 24. The layers on each side of the connection joint 100 form a series of projecting substantially planar fins which interleave with their counterpart on the other side of the joint. The interleaved layers may be clamped such that substantially all (up to 100%) load carried through the connection joint between the blade portions is transferred by friction between the interleaved layers.

Figure 6 shows a schematic side view of an example of the connection joint 100. The first spar cap portion 48a includes a stack of layers of composite material 60, e.g. carbon or glass fibre composite. The composite material may be a stack of layers of pultruded carbon or glass fibre composite material with the fibres oriented in the longitudinal direction of the spar cap 48 aligned with the spanwise direction of the blade 20. The second spar cap portion 48b may be constructed similarly. The dimensions of the stacks of composite material may be the same on either side of the connection joint 100. For example, the width and number of the layers of composite material 60 may be the same on either side of the connection joint 100. Alternatively, the dimensions and number of layers in the stack may be different from one side of the joint to the other.

The plurality of first layers 56 associated with the first spar cap portion 48a may be a plurality of first metal layers 62. The plurality of second layers 58 associated with the second spar cap portion 48b may be a plurality of second metal layers 64. The first and second metal layers 62, 64 may be integrated into the respective spar cap portions 48a, 48b. For example, the plurality of first metal layers 62 and/or the plurality of second metal layer 64 may be scarfed into the stack of composite layers 60 of the respective first or second spar cap portions 48a, 48b. In order to form the scarfed joints, the layers of composite material 60 may be tapered in their thickness direction towards the connection joint 100. Similarly, the plurality of first and second metal layers 62, 64 may be tapered in their thickness direction away from the connection joint 100.

Each of the plurality of first and second metal layers 62, 64 may be formed as a metal plate or sheet having an imbedded portion with in the stack of composite material 60 and a projecting portion which extends from the end of the respective spar cap portions 48a, 48b where the composite material terminates, i.e. the layers of composite material are tapered to zero thickness. The composite layers 60 terminate at or near an end of the blade shell 42 of the respective first and second blade portion 22, 24 nearest the connection joint 100. As can best be seen in figure 5a the projecting portion of the metal layers 62, 64 projects beyond the end surface of the blade shell 42 of the first and second blade portions 22, 24.

The plurality of first and second metal layers 62, 64 are interleaved and may be arranged in an alternating fashion through the thickness of the connection joint 100. The interleaved metal layers may be substantially planar in the region of the overlap where the projecting portions of the respective first and second metal layers 62, 64 are overlapping. By clamping together the interleaved metal layers a frictional connection between the blade portions 22, 24 is created.

The connection joint 100 may include at least one fastener 66 passing through the interleaved metal layers to clamp the interleaved metal layers together. The fasteners 66 may be arranged in rows extending substantially chordwise and parallel with the width direction of the respective first and second spar cap portions 48a, 48b. The fasteners 66 pass through apertures, such as holes or slots formed in the interleaved metal layers 62, 64. The apertures formed in the metal layers may provide a clearance fit with the fastener 66 such that substantially no shear load is transferred between the metal layers 62, 64 and the fastener 66. One or more apertures could be a nonclearance fit to aid in positioning the blade portions 22, 24 together. If an interference fit is made between the fastener 66 and the layers 62, 64 then the load across the joint will be transferred predominantly in friction between the layers but also with some shear load transferred via the interference fastener(s).

Since the fastener 66 carries substantially no shear load the fastener 66 may be sized to support a predominately tensile load in the fastener required to apply sufficient clamping load to the interleaved metal plates 62, 64 to create the frictional connection at the connection joint 100. The fastener 66 may include a captive nut towards the hollow interior 44 of the blade shell 42 so that no access within the hollow interior space 44 is required to complete the connection joint 100. The fastener 66 may include a torque tightening nut for engagement with a torque tightening tool towards the outer surface of the blade shell 42. The fastener 66 may be a bolt, threaded shaft or similar tension fastener. If access within the blade is available, then a torque tightening nut may be provided inside the blade for applying the clamping load.

By tapering the thickness of the composite layers 60 of the respective first and second spar cap portions 48a, 48b towards zero thickness the predominant tensile and compressive loads carried by the first and second spar cap portions 48a, 48b are transferred into the first and second metal layers 62, 64. The metal layers 62, 64 are easier to slide with respect to one another when bringing the blade portions 22, 24 together for jointing, as compared with interleaved composite layers. Furthermore, in order to achieve the tapering in each of the layers of composite material 60 a series of spacers 68 may be provided, e.g. in the form of wedges so as to alternate with the metal plates 62, 64. The wedges or other spacers may include core material, or glass fibre composite 'pads'. The core material may be foam, balsa or any other suitable core material commonly used in the construction of wind turbine blade shells.

As compared with other jointing solutions for joining blade portions of wind turbine blades it can be seen from figure 6 that the dimensions of the spar cap portions 48a, 48b are substantially maintained up to and through the connection joint 100 into the adjacent blade portion. Depending on the grade of the material for the metal layers, some increase in thickness of the metal layers may be required to achieve the desired strength of the connection joint.

Whereas in figure 6 the composite layers 60 are terminated away from the clamped interleaved metal layers of the connection joint 100, in the example shown in figure 7 the composite layers 60 of the respective first and second spar cap portions 48a, 48b are interleaved in the connection joint 100. A plurality of first metal layers 62 and a plurality of second metal layers 64 are also interleaved in the connection joint 100.

The plurality of composite layers 60 may be fanned out towards the connection joint 100 so as to accommodate the thickness of the metal layers 62, 64 in the joint. The space between adjacent layers of composite material 60 in the first and second spar cap portions 48a, 48b may be filled with spacers 68. The spacers 68 may include core material.

At least some of the composite layers 60 of the first spar cap portions 48a may have an associated first metal layer 62. At least some of the composite layers 60 of the second spar cap portion 48b may have an associated second metal layer 64. The first and second spar cap portions 48a, 48b and their associated metal layers 62, 64 may be interleaved such that the composite layers 60 and metal layers 62, 64 are alternating through the connection joint 100.

The first and or second spar cap portions 48a, 48b may have a substantially constant width up to the connection joint 100. As a result of the fanning out of the composite layers 60 in the thickness direction of the joint, the thickness of the first and or second spar cap portions 48a, 48b may increase towards the connection joint 100. The metal layers 62, 64 may be adhered to a respective one of the composite layers 60 of either the first spar cap portion 48a or second spar cap portion 48b. Since the composite layers 60 extend into the connection joint 100, the adhesive bond between the metal layers 62. 64 and their adjoining composite layers 60 is less critical than in the example shown in figure 6. However, due to the presence of composite layers 60 and the metal layers 62, 64 in the connection joint 100 of the example shown in figure 7 the overall joint thickness is higher as compared with that shown in figure 6. As in the example described above with reference to figure 6, the interleaved layers are clamped together between the first and second blade portions 48a, 48b, e.g. using fasteners 66 in the same way as described above.

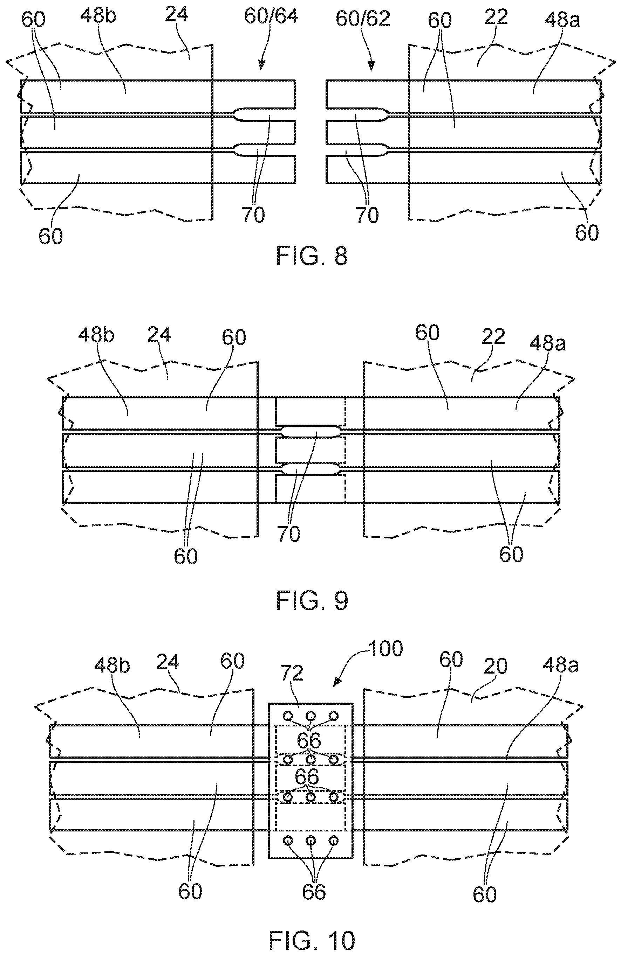

Figure 8 illustrates a schematic plan view of the stages for joining the first and second blade portions 22, 24 by formation of the connection joint 100 between the first spar cap portion 48a and the second spar cap portion 48b. As can be seen from figures 8 -10 the first and second spar cap portions 48a, 48b each comprise a plurality of stacks of the composite layers 60 and in the illustrated example three such stacks are provided. Providing multiple stacks of the composite layers 60 enables the spar cap to better conform to the curvature of the blade shell in the chordwise direction. However, it will apparent that the spar cap portions 48a, 48b may comprise different numbers of stacks of the composite layers 60 and indeed only a single stack of the composite layers 60 may be provided on one or both of the first and second spar cap portions 48a, 48b.

As can best be seen in figure 8 the plurality of first layers (which may be composite layers 60 or metal layers 62 or a combination of composite and metal layers 60, 62) associated with the first spar cap portion 48a have at least one cut out 70 at one end. Similarly, the plurality of second layers (which may be composite layers 60, metal layers 64 or a combination of composite and metal layers 60,64) associated with the second spar cap portion 48b have at least one cut out 70 at one end. The cut outs are open at the ends of the respective first and second layers. In other words, the cut outs are an elongated slot open at the ends of the respective first and second layers

During formation of the connection joint 100, the first and second blade portions 22, 24 are brought together such that the plurality of first layers 60/62 and the plurality of second layers 60/64 are interleaved with their cut outs 70 aligned, as best shown in figure 9. The cut outs 70 are aligned in the plan view such that the widths of the cut outs 70 of the respective first and second blade portions 22, 24 are substantially coincident. Finally, as shown in figure 10, the fasteners 66 pass through the cut outs 70 of the plurality of first and second layers 60/62, 60/64 and are tensioned to clamp together the interleaved plurality of first 60/62 and second 60/64 layers between the first and second blade portions 22, 24.

The fasteners 66 may be received in top and bottom clamping plates 72 arranged above and below the interleaved plurality of first and second layers. A row of fasteners 66 may pass to one or either side of the interleaved layers. One or more further rows of fasteners may pass through the aligned cut outs 70.

The cut outs 70 have a width greater than a width of the shank of the fastener 66 so as to provide a clearance fit with the fasteners 66. The cut outs may be arranged as slots having substantially parallel sides towards the respective end of the first and second layers 60/62, 60/64. The cut outs are especially suitable for use with unidirectional composite material where this is used in the interleaved layers so as to avoid stress concentrations. By comparison with a circular hole through a unidirectional fibre composite material, the parallel sided slots of the cut out 70 provide reduced stress concentrations when tensile and/or compressive loads are transferred across the connection joint 100 from the first spar cap portion 48a to the second spar cap portion 48b.

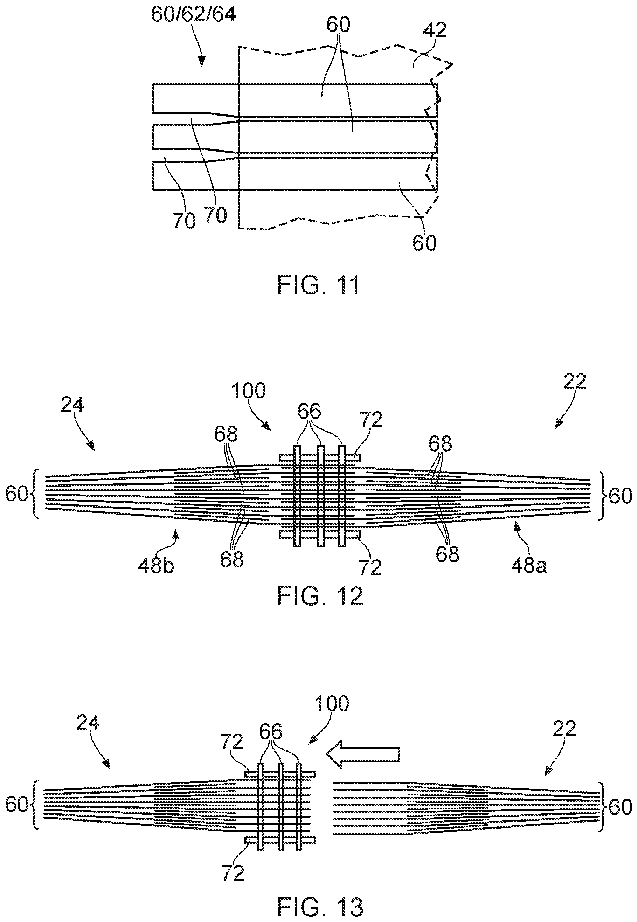

The geometrical design of the cut outs needs to take stress concentration aspects into consideration. Rapid changes in curvature should be avoided. For example, the ends of the slots of the cut outs 70 closest to the blade shells 42 may be curved in the plan view. Square corners to the cut outs inboard from the end of the interleaved layers should preferably be avoided. An alternative arrangement is shown in figure 11 in which the cut outs 70 are parallel sided and smoothly taped at their end nearest the blade shell 42. The taper in the cut outs 70 may extend right up to the edge of the blade shell 42. As can best be seen from figure 10 when the connection joint 100 is completed there is a gap between the edge of the blade shell of the first blade portion 22 and the edge of the blade shell of the second blade portion 25. There may also be a gap between the respective edges of the blade shells of the first and second blade portions 22, 24 and the connection plate 72.

Whilst in the examples described with reference to figures 8 - 10 the cut outs 70 extend up to the end of the interleaved 60/62, 60/64, it will be appreciated that (in an example not within the scope of the invention as defined by the appended claims) a fastener 66 may pass through circular, elliptical or other through holes formed through the plurality of interleaved layers. Whilst the formation of through holes rather than elongate cut out slots may introduce stress concentrations, depending on the material of the interleaved layers the stress concentration may possibly be managed. For example, in the example shown in figure 6 where the interleaved layers are all metal then the metal layers will be more tolerant to through holes for receiving the fastener 66 than would, for example, interleaved layers of unidirectional composite material. A benefit for using metal as the material of the interleaved layers is that friction joints inherently cause a 3D stress condition and hence a predominately isotropic material such as metal will perform better than an anisotropic material. An advantage of having a through hole is that the remaining area of the interleaved layers in contact with their adjacent layers is increased which improves the performance of the frictional connection in the connection join 100. However, a disadvantage of a hole in the interleaved layers rather than the cut outs 70 open at one end is that the fastener 66 may only be passed through the interleaved layers once the first and second blade portions 22, 24 have been brought together to bring the holes into alignment.

Turning next to figures 12 and 13 a further example is shown in which the interleaved layers are all composite layers with no interleaved metal layers. Each of the first and second spar cap portions 48a, 48b includes a stack of composite layers 60 which are fanned out towards the connection joint 100. Spacers 68 are provided between the adjacent composite layers 60 towards the connection joint 100. The spacers 68 may be formed as wedges, for example. The spacers may include core material. The interleaved layers comprise only the composite layers 60 arranged in an alternating fashion, with composite layers 60 of the first spar cap portion 48a being interleaved between composite layers 60 of the second spar cap portion 48b.

The plurality of first and second layers 60 associated with the first spar cap portion 48a and the second spar cap portion 48b may have at least one cut out 70 such as that shown in figure 8, at one end. The plurality of fasteners 66 pass through the cut outs 70 of the plurality of first and second layers 60 and are tensioned to clamp together the interleaved plurality of first and second layers 60 between the first and second blade portions 22, 24.

As shown in figure 13, a benefit of the open ended cut outs 70 (applicable to any of the above examples) is that the plurality of fasteners 66 and optionally the top and bottom connection plates 72 of the connection joint 100 may be arranged on one or the other of the first and second blade portions 22, 24. Before tightening the fasteners 66 the other of the blade portions not carrying the fasteners may be brought towards the fasteners 66 and slid into place such that the plurality of first and second layers of the connection joint 100 are interleaved. This is only made possible by virtue of the open ended parallel sided cut outs 70 formed at least in the plurality of layers of the 'other' of the blade portions (i.e. the blade portion not already carrying the fasteners 66. Once the first and second blade portions 22, 24 have been brought together as shown in figure 12 the fasteners 66 may be tightened so as to clamp together the interleaved plurality of first and second layers.

In another method of forming the joint, the fasteners 66 may be loosely installed in the open ends of the cut outs 70 of the layers of both the first and second blade portions 22, 24. Bringing the first and second blade portions together to interleave the first and second layers causes the fasteners 66 to move along the cut outs 70 towards the closed ends of the respective cut outs. Once the first and second blade portions are 22, 24 brought together the fasteners are tightened to clamp up and form the joint 100.

Of course, it will be appreciated that the above described manner of forming the connection joint 100 by preinstalling the fasteners 66 may be applied to any of the arrangements of interleaved layers described above with reference to figure 6 and 7 where only metallic or a hybrid of metallic and composite layers are interleaved to form the connection joint 100.

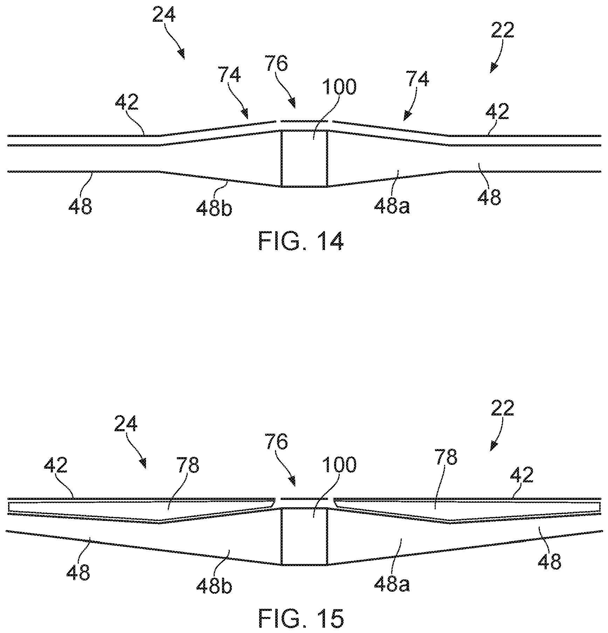

Where the plurality of composite layers 60 is fanned out, such as described above with reference to the examples in figures 7 and 12, such that the thickness of the first and/or second spar cap portions increases towards the connection joint 100, then the profile of the blade shell 42 may have a ramp of increasing blade profile thickness 74 towards the connection joint 100, as shown in Figure 14. A cover plate 76 may be provided to complete the outer aerodynamic surface of the blade in the vicinity of the connection joint 100. The cover plate 76 may be removable to allow access to the fastener 66 for disassembly and reassembly of the connection joint 100.

Figure 15 shows an alternative arrangement which may be used where the thickness of the first and/or second spar cap portions 48a, 48b increases towards the connection joint but it is desirable to maintain a conformal blade shell across the joint. In this arrangement a filler or core material 78 is provided between the first and second spar cap portions 48a, 48b and the outer surface of the blade shell 42 which may be constituted by the layers of fibreglass material 52 forming the outer skin of the blade shell. Again, a cover plate 76 may be provided over the connection joint 100. Maintaining the aerodynamic blade profile across the connection 100 may be advantageous to improve the aerodynamic efficiency of the blade. However, this requires diverting the spar cap further from the outer surface of the blade shell towards the interior of the blade which may reduce the blade stiffness, which may in turn require a stiffer spar cap construction, e.g. with more layers of composite material., as compared with the arrangement of figure 14.

In any of the above described examples the spar cap portions may be fanned out in the width direction of the spar cap towards the connection joint. This may increase the frictional area of the joint, and/or increase the load carrying capacity of the joint, and/or provided greater lateral stability (against blade spanwise twist) in the joint. This may be particularly suitable for use in the metal connection joint of figure 6. The composite layers of the spar cap portions may maintain a constant width towards the connection joint.

The composite layers of the spar cap portions may include biaxial or other non-unidirectional fibre material. In this case the spar cap portions may be more tolerant to through holes for the fasteners, rather than the open ended cut outs slots. The spar cap portions may also be fanned out in the width direction of the spar cap towards the connection joint. The biaxial or other non-unidirectional fibre material may be joined onto or into unidirectional fibre material (e.g. pultruded carbon) of the spar caps away from the connection joint.

The blade portions may be manufactured within a common mould with a separator in the mould between the blade portions. This may aid aligning of the parts of the connection joint when the blade portions are removed from the mould and ready for jointing together. Alternatively, the blade portions may be manufactured in separate moulds and a plug may be provided in the mould to replicate the shape and form of another blade portion to which the blade portion in the mould is to be joined.

Although the invention has been described above with reference to one or more preferred embodiments, it will be appreciated that various changes or modifications may be made without departing from the scope of the invention as defined in the appended claims.

## Claims

1. A wind turbine blade (20) comprising:
a first blade portion (22) having a shell that defines a suction side, a pressure side, a leading edge, and a trailing edge of the blade, the first blade portion further including a first spar cap portion (48a);
a second blade portion (24) having a shell that defines a suction side, a pressure side, a leading edge, and a trailing edge of the blade, the second blade portion further including a second spar cap portion (48b); and
a connection joint (100) for coupling the first and second blade portions (22, 24) together, **characterised in that** the connection joint includes:
a plurality of first layers (56) associated with the first spar cap portion (48a) and having at least one cut out (70) at one end, the cut out being open at the end of the first layers;
a plurality of second layers (58) associated with the second spar cap portion (48b) and having at least one cut out (70) at one end, the cut out being open at the end of the second layers; and
a plurality of fasteners (66),
wherein the plurality of first layers (56) and the plurality of second layers (58) are interleaved with their cut outs (70) aligned, and the fasteners (66) pass through the cut outs of the plurality of first and second layers and are tensioned to clamp together the interleaved plurality of first and second layers between the first and second blade portions (22, 24).

2. A wind turbine blade according to claim 1, wherein the connection joint (100) further comprises at least one row of fasteners (66) passing through the cut outs (70) of the plurality of first and second layers (56, 58) and are tensioned to clamp together the interleaved plurality of first and second layers between the first and second blade portions.

3. A wind turbine blade according to claim 1 or claim 2, wherein the cut outs (70) provide a clearance fit with the fastener received (66) therein.

4. A wind turbine blade according to any preceding claim, further comprising metal plates (72) on either side of the interleaved plurality of first and second layers (56, 58), with the tensioned fasteners (66) passing through fastener receiving holes in the metal plates and bearing against respective surfaces of the metal plates.

5. A wind turbine blade according to any preceding claim, further comprising at least one first metal layer (62) associated with the first spar cap portion (48a), and at least one second metal layer (64) associated with the second spar cap portion (48b), wherein the at least one first metal layer and the at least one second metal layer are interleaved with the plurality of first layers and the plurality of second layers (56, 58).

6. A wind turbine blade according to any preceding claim, wherein the plurality of first layers (56) and the plurality of second layers (58) include composite material.

7. A wind turbine blade according to claim 6, wherein at least some of the composite layers (56) of the first spar cap portion have an associated first metal layer (62), and at least some of the composite layers of the second spar cap portion have an associated second metal layer (64), and the first and second spar cap portions and their associated metal layers are interleaved such that at least some of the composite layers and metal layers are alternating through the connection joint (100).

8. A wind turbine blade according to any preceding claim, wherein the plurality of first layers (56) form part of the first spar cap portion (48a), and the plurality of second layers (58) form part of the second spar cap portion (48b), and wherein the plurality of first layers extend beyond an end of the shell of the first blade portion and into the connection joint, and the plurality of second layers extend beyond an end of the shell of the second blade portion and into the connection joint.

9. A wind turbine blade according to any preceding claim, wherein the first and/or second spar cap portions (48a, 48b) include pultruded carbon layers.

10. A wind turbine blade according to any preceding claim, wherein the first and/or second spar cap portions (48a, 48b) include composite layers (60) with one or more spacers (68) between adjacent composite layers.

11. A wind turbine blade according to any preceding claim, wherein the first and/or second spar caps (48a, 48b) have a substantially constant width up to and/or through the connection joint (100).

12. A wind turbine blade according to any preceding claim, wherein the thickness of the first and/or second spar caps (48a, 48b) increases towards the connection joint (100).

13. A wind turbine blade according to claim 12, wherein an infill material (78) is provided between the respective blade shell and the first and/or second spar caps (48a, 48b) to accommodate the increasing spar cap thickness whilst maintaining a contiguous outer surface of the blade shells on either side of the connection joint.

14. A wind turbine blade according to any preceding claim, wherein the first and/or second spar cap portions (48a, 48b) are integrated into the shell of the first and/or second blade portions, respectively.

15. A method of assembling a wind turbine blade (20), according to any of claims 1-14, the wind turbine blade comprising:
a first blade portion (22) having a shell that defines a suction side, a pressure side, a leading edge, and a trailing edge of the blade, the first blade portion further including a first spar cap portion (48a);
a second blade portion (24) having a shell that defines a suction side, a pressure side, a leading edge, and a trailing edge of the blade, the second blade portion further including a second spar cap portion (48b); **characterised by**:
a plurality of first layers (56) associated with the first spar cap portion (48a) and having at least one cut out (70) at one end, the cut out being open at the end of the first layers;
a plurality of second layers (58) associated with the second spar cap portion (48b) and having at least one cut out (70) at one end, the cut out being open at the end of the second layers; and
a plurality of fasteners (66),
the method comprising bringing the first and second blade portions (22, 24) together such that the plurality of first layers (56) and the plurality of second layers (58) are interleaved with their cut outs (70) aligned, passing the fasteners (66) through the cut outs of the plurality of first and second layers, and tensioning the fasteners to clamp together the interleaved plurality of first and second layers between the first and second blade portions to couple the first and second blade portions together.

## Patentansprüche

1. Windkraftanlagenblatt (20), umfassend:
einen ersten Blattabschnitt (22), der eine Schale aufweist, die eine windabgewandte Seite, eine windzugewandte Seite, eine Blattvorderkante und eine Blatthinterkante des Blatts definiert, wobei der erste Blattabschnitt weiter einen ersten Rotorblattgurtabschnitt (48a) definiert;
einen zweiten Blattabschnitt (24), der eine Schale aufweist, die eine windabgewandte Seite, eine windzugewandte Seite, eine Blattvorderkante und eine Blatthinterkante des Blatts definiert, wobei der zweite Blattabschnitt weiter einen zweiten Rotorblattgurtabschnitt (48b) beinhaltet; und
ein Verbindungsgelenk (100) zum Koppeln des ersten und zweiten Blattabschnitts (22, 24) aneinander, **dadurch gekennzeichnet, dass** das Verbindungsgelenk Folgendes beinhaltet:
eine Vielzahl von ersten Schichten (56), die mit dem ersten Rotorblattgurtabschnitt (48a) verknüpft ist und mindestens einen Ausschnitt (70) an einem Ende aufweist, wobei der Ausschnitt an dem Ende der ersten Schichten offen ist;
eine Vielzahl von zweiten Schichten (58), die mit dem zweiten Rotorblattgurtabschnitt (48b) verknüpft ist und mindestens einen Ausschnitt (70) an einem Ende aufweist, wobei der Ausschnitt an dem Ende der zweiten Schichten offen ist; und
eine Vielzahl von Befestigungsmitteln (66),
wobei die Vielzahl von ersten Schichten (56) und die Vielzahl von zweiten Schichten (58) mit ihren Ausschnitten (70) ausgerichtet ineinander verschachtelt sind und die Befestigungsmittel (66) durch die Ausschnitte der Vielzahl von ersten und zweiten Schichten hindurchgehen und gespannt sind, um die ineinander verschachtelte Vielzahl von ersten und zweiten Schichten zwischen dem ersten und zweiten Blattabschnitt (22, 24) aneinander zu klemmen.

2. Windkraftanlagenblatt nach Anspruch 1, wobei das Verbindungsgelenk (100) weiter mindestens eine Reihe von Befestigungsmitteln (66) umfasst, die durch die Ausschnitte (70) der Vielzahl von ersten und zweiten Schichten (56, 58) hindurchgehen und gespannt sind, um die ineinander verschachtelte Vielzahl von ersten und zweiten Schichten zwischen dem ersten und zweiten Blattabschnitt aneinander zu klemmen.

3. Windkraftanlagenblatt nach Anspruch 1 oder Anspruch 2, wobei die Ausschnitte (70) eine Spielpassung mit dem Befestigungsmittel darin aufgenommen (66) bereitstellen.

4. Windkraftanlagenblatt nach einem vorstehenden Anspruch, weiter umfassend Metallplatten (72) an beiden Seiten der ineinander verschachtelten Vielzahl von ersten und zweiten Schichten (56, 58), wobei die gespannten Befestigungsmittel (66) durch Befestigungsmittelaufnahmeöffnungen in den Metallplatten hindurchgehen und an entsprechenden Oberflächen der Metallplatten anliegen.

5. Windkraftanlagenblatt nach einem vorstehenden Anspruch, weiter umfassend mindestens eine erste Metallschicht (62), die mit dem ersten Rotorblattgurtabschnitt (48a) verknüpft ist, und mindestens eine zweite Metallschicht (64), die mit dem zweiten Rotorblattgurtabschnitt (48b) verknüpft ist, wobei die mindestens eine erste Metallschicht und die mindestens eine zweite Metallschicht mit der Vielzahl von ersten Schichten und der Vielzahl von zweiten Schichten (56, 58) verschachtelt ist.

6. Windkraftanlagenblatt nach einem vorstehenden Anspruch, wobei die Vielzahl von ersten Schichten (56) und die Vielzahl von zweiten Schichten (58) Faserverbundwerkstoff beinhalten.

7. Windkraftanlagenblatt nach Anspruch 6, wobei mindestens einige der Faserverbundschichten (56) des ersten Rotorblattgurtabschnitts eine verknüpfte erste Metallschicht (62) aufweisen, und mindestens einige der Faserverbundschichten des zweiten Rotorblattgurtabschnitts eine verknüpfte zweite Metallschicht (64) aufweisen und der erste und zweite Rotorblattgurtabschnitt und ihre verknüpften Metallschichten derart ineinander verschachtelt sind, dass mindestens einige der Faserverbundschichten und Metallschichten sich durch das Verbindungsgelenk (100) abwechseln.

8. Windkraftanlagenblatt nach einem vorstehenden Anspruch, wobei die Vielzahl von ersten Schichten (56) Teil des ersten Rotorblattgurtabschnitts (48a) bilden und die Vielzahl von zweiten Schichten (58) Teil des zweiten Rotorblattgurtabschnitts (48b) bilden und wobei sich die Vielzahl von ersten Schichten über ein Ende der Schale des ersten Blattabschnitts hinaus und in das Verbindungsgelenk erstreckt und sich die Vielzahl von zweiten Schichten über ein Ende der Schale des zweiten Blattabschnitts hinaus und in das Verbindungsgelenk erstreckt.

9. Windkraftanlagenblatt nach einem vorstehenden Anspruch, wobei der erste und/oder zweite Rotorblattgurtabschnitt (48a, 48) gezogene Kohlenstoffschichten beinhalten.

10. Windkraftanlagenblatt nach einem vorstehenden Anspruch, wobei der erste und/oder zweite Rotorblattgurtabschnitt (48a, 48) Faserverbundschichten (60) mit einem oder mehreren Abstandhaltern (68) zwischen benachbarten Faserverbundschichten beinhalten.

11. Windkraftanlagenblatt nach einem vorstehenden Anspruch, wobei der erste und/oder zweite Rotorblattgurt (48a, 48b) eine im Wesentlichen konstante Breite bis zum und/oder durch das Verbindungsgelenk (100) aufweisen.

12. Windkraftanlagenblatt nach einem vorstehenden Anspruch, wobei die Dicke des ersten und/oder zweiten Rotorblattgurts (48a, 48b) zum Verbindungsgelenk (100) hin zunimmt.

13. Windkraftanlagenblatt nach Anspruch 12, wobei ein Einfüllungsmaterial (78) zwischen der jeweiligen Blattschale und dem ersten und/oder zweiten Rotorblattgurt (48a, 48b) bereitgestellt ist, um die zunehmende Rotorblattgurtdicke aufzunehmen, während eine durchgehende Außenfläche der Blattschalen auf beiden Seiten des Verbindungsgelenks aufrechterhalten wird.

14. Windkraftanlagenblatt nach einem vorstehenden Anspruch, wobei der erste und/oder zweite Rotorblattgurtabschnitt (48a, 48b) in die Schale des ersten bzw. zweiten Blattabschnitts eingebaut sind.

15. Verfahren zum Zusammenbauen eines Windkraftanlagenblatts (20) nach einem der Ansprüche 1 - 14, wobei das Windkraftanlagenblatt Folgendes umfasst:
einen ersten Blattabschnitt (22), der eine Schale aufweist, die eine windabgewandte Seite, eine windzugewandte Seite, eine Blattvorderkante und eine Blatthinterkante des Blatts definiert, wobei der erste Blattabschnitt weiter einen ersten Rotorblattgurtabschnitt (48a) definiert;
einen zweiten Blattabschnitt (24), der eine Schale aufweist, die eine windabgewandte Seite, eine windzugewandte Seite, eine Blattvorderkante und eine Blatthinterkante des Blatts definiert, wobei der zweite Blattabschnitt weiter einen zweiten Rotorblattgurtabschnitt (48b) beinhaltet; **gekennzeichnet durch**:
eine Vielzahl von ersten Schichten (56), die mit dem ersten Rotorblattgurtabschnitt (48a) verknüpft ist und mindestens einen Ausschnitt (70) an einem Ende aufweist, wobei der Ausschnitt an dem Ende der ersten Schichten offen ist;
eine Vielzahl von zweiten Schichten (58), die mit dem zweiten Rotorblattgurtabschnitt (48b) verknüpft ist und mindestens einen Ausschnitt (70) an einem Ende aufweist, wobei der Ausschnitt an dem Ende der zweiten Schichten offen ist; und
eine Vielzahl von Befestigungsmitteln (66),
wobei das Verfahren umfasst, den ersten und zweiten Blattabschnitt (22, 24) derart zusammenzubringen, dass die Vielzahl von ersten Schichten (56) und die Vielzahl von zweiten Schichten (58) mit ihren Ausschnitten (70) ausgerichtet ineinander verschachtelt sind, die Befestigungsmittel (66) durch die Ausschnitte der Vielzahl von ersten und zweiten Schichten hindurchzuführen und die Befestigungsmittel zu spannen, um die ineinander verschachtelte Vielzahl von ersten und zweiten Schichten zwischen dem ersten und zweiten Blattabschnitt aneinander zu klemmen, um den ersten und zweiten Blattabschnitt aneinander zu koppeln.

## Revendications

1. Pale d'éolienne (20) comprenant :
une première partie de pale (22) présentant une coque qui définit un extrados, un intrados, un bord d'attaque et un bord de fuite de la pale, la première partie de pale incluant en outre une première partie de raidisseur longitudinal (48a) ;
une seconde partie de pale (24) présentant une coque qui définit un extrados, un intrados, un bord d'attaque et un bord de fuite de la pale, la seconde partie de pale incluant en outre une seconde partie de raidisseur longitudinal (48b) ; et
un raccord de liaison (100) pour coupler les première et seconde parties de pale (22, 24) l'une à l'autre, **caractérisée en ce que** le raccord de liaison inclut :
une pluralité de premières couches (56) associées à la première partie de raidisseur longitudinal (48a) et présentant au moins une découpe (70) à une extrémité, la découpe étant ouverte à l'extrémité des premières couches ;
une pluralité de secondes couches (58) associées à la seconde partie de raidisseur longitudinal (48b) et présentant au moins une découpe (70) à une extrémité, la découpe étant ouverte à l'extrémité des secondes couches ; et
une pluralité de fixations (66),
dans laquelle la pluralité de premières couches (56) et la pluralité de secondes couches (58) sont entrelacées avec leurs découpes (70) alignées, et les fixations (66) passent à travers les découpes de la pluralité de premières et secondes couches et sont tendues pour serrer la pluralité de première et secondes couches entrelacées les unes contre les autres entre les première et seconde parties de pale (22, 24).

2. Pale d'éolienne selon la revendication 1, dans laquelle le raccord de liaison (100) comprend en outre au moins une rangée de fixations (66) passant à travers les découpes (70) de la pluralité de premières et secondes couches (56, 58) et qui sont tendues pour serrer la pluralité de premières et secondes couches entrelacées les unes contre les autres entre les première et seconde parties de pale.

3. Pale d'éolienne selon la revendication 1 ou 2, dans laquelle les découpes (70) fournissent un ajustement avec jeu avec la fixation (66) reçue à l'intérieur de celles-ci.

4. Pale d'éolienne selon une quelconque revendication précédente, comprenant en outre des plaques métalliques (72) des deux côtés de la pluralité de premières et secondes couches (56, 58) entrelacées, avec les fixations (66) tendues passant à travers des trous de réception de fixation dans les plaques métalliques et appuyant contre des surfaces respectives des plaques métalliques.

5. Pale d'éolienne selon une quelconque revendication précédente, comprenant en outre au moins une première couche métallique (62) associée à la première partie de raidisseur longitudinal (48a), et au moins une seconde couche métallique (64) associée à la seconde partie de raidisseur longitudinal (48b), dans laquelle la au moins une première couche métallique et la au moins une seconde couche métallique sont entrelacées avec la pluralité de premières couches et la pluralité de secondes couches (56, 58).

6. Pale d'éolienne selon une quelconque revendication précédente, dans laquelle la pluralité de premières couches (56) et la pluralité de secondes couches (58) incluent un matériau composite.

7. Pale d'éolienne selon la revendication 6, dans laquelle au moins certaines des couches composites (56) de la première partie de raidisseur longitudinal présentent une première couche métallique (62) associée, et au moins certaines des couches composites de la seconde partie de raidisseur longitudinal présentent une seconde couche métallique (64) associée, et les première et seconde parties de raidisseur longitudinal et leurs couches métalliques associées sont entrelacées de sorte qu'au moins certaines des couches composites et des couches métalliques soient en alternance à travers le raccord de liaison (100).

8. Pale d'éolienne selon une quelconque revendication précédente, dans laquelle la pluralité de premières couches (56) fait partie de la première partie de raidisseur longitudinal (48a), et la pluralité de secondes couches (58) fait partie de la seconde partie de raidisseur longitudinal (48b), et dans laquelle la pluralité de premières couches s'étend au-delà d'une extrémité de la coque de la première partie de pale et dans le raccord de liaison, et la pluralité de secondes couches s'étend au-delà d'une extrémité de la coque de la seconde partie de pale et dans le raccord de liaison.

9. Pale d'éolienne selon une quelconque revendication précédente, dans laquelle les première et/ou seconde parties de raidisseur longitudinal (48a, 48b) incluent des couches de carbone extrudées par pultrusion.

10. Pale d'éolienne selon une quelconque revendication précédente, dans laquelle les première et/ou seconde parties de raidisseur longitudinal (48a, 48b) incluent des couches composites (60) avec une ou plusieurs entretoises (68) entre des couches composites adjacentes.

11. Pale d'éolienne selon une quelconque revendication précédente, dans laquelle les premier et/ou second raidisseurs longitudinaux (48a, 48b) présentent une largeur sensiblement constante jusqu'à et/ou à travers le raccord de liaison (100).

12. Pale d'éolienne selon une quelconque revendication précédente, dans laquelle l'épaisseur des premier et/ou second raidisseurs longitudinaux (48a, 48b) augmente vers le raccord de liaison (100).

13. Pale d'éolienne selon la revendication 12, dans laquelle un matériau de remplissage (78) est prévu entre la coque de pale respective et les premier et/ou second raidisseurs longitudinaux (48a, 48b) pour tenir compte de l'épaisseur croissante de raidisseur longitudinal tout en maintenant une surface extérieure contiguë des coques de pale des deux côtés du raccord de liaison.

14. Pale d'éolienne selon une quelconque revendication précédente, dans laquelle les première et/ou seconde parties de raidisseur longitudinal (48a, 48b) sont intégrées dans la coque respectivement des première et/ou seconde parties de pale.

15. Procédé d'assemblage d'une pale d'éolienne (20), selon l'une quelconque des revendications 1-14, la pale d'éolienne comprenant :
une première partie de pale (22) présentant une coque qui définit un extrados, un intrados, un bord d'attaque et un bord de fuite de la pale, la première partie de pale incluant en outre une première partie de raidisseur longitudinal (48a) ;
une seconde partie de pale (24) présentant une coque qui définit un extrados, un intrados, un bord d'attaque et un bord de fuite de la pale, la seconde partie de pale incluant en outre une seconde partie de raidisseur longitudinal (48b) ; **caractérisé par** :
une pluralité de premières couches (56) associées à la première partie de raidisseur longitudinal (48a) et présentant au moins une découpe (70) à une extrémité, la découpe étant ouverte à l'extrémité des premières couches ;
une pluralité de secondes couches (58) associées à la seconde partie de raidisseur longitudinal (48b) et présentant au moins une découpe (70) à une extrémité, la découpe étant ouverte à l'extrémité des secondes couches ; et
une pluralité de fixations (66),
le procédé comprenant la réunion des première et seconde parties de pale (22, 24) de sorte que la pluralité de premières couches (56) et la pluralité de secondes couches (58) soient entrelacées avec leurs découpes (70) alignées, le passage des fixations (66) à travers les découpes de la pluralité de premières et secondes couches, et la tension des fixations pour serrer la pluralité de premières et secondes couches entrelacées les unes contre les autres entre les première et seconde parties de pale pour coupler les première et seconde parties de pale l'une à l'autre.
